(19) Europäisches Patentamt
European Patent Office
Office européen des brevets

(11) EP 0 831 065 B1

(12) **EUROPEAN PATENT SPECIFICATION**

(45) Date of publication and mention of the grant of the patent:
**19.07.2000 Bulletin 2000/29**

(51) Int Cl.7: **C02F 5/10**, C02F 5/14, C02F 5/12

(21) Application number: **97307382.8**

(22) Date of filing: **22.09.1997**

(54) **A method and a composition for controlling scale in an aqueous system using a synergistic composition**

Verfahren und Verbindung zur Kontrolle von Kesselstein in wässerigen Systemen durch Verwendungvon synergetischen Zusammensetzungen

Un procédé et une composition pour contrôler le tartre dans un système aqueux en utilisant une composition synergique

(84) Designated Contracting States:
**BE DE FR GB NL**

(30) Priority: **24.09.1996 US 719184**
**24.09.1996 US 718840**

(43) Date of publication of application:
**25.03.1998 Bulletin 1998/13**

(73) Proprietor: **Calgon Corporation**
**Pittsburgh, Pennsylvania 15205 (US)**

(72) Inventors:
- **Gill, Jasbir S.**
**McKees Rocks, Pennsylvania 15136 (US)**
- **Parsons, Jennifer R.**
**Pittsburgh, Pennsylvania 15206 (US)**

(74) Representative: **Geissler, Bernhard, Dr.**
**Patent- und Rechtsanwälte**
**Bardehle-Pagenberg-Dost-Altenburg-Geissler-Isenbruck**
**Theodor-Heuss-Anlage 12**
**68165 Mannheim (DE)**

(56) References cited:
**EP-A- 0 375 615** **EP-A- 0 767 145**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### BACKGROUND OF THE INVENTION

1. Field Of the Invention

This invention relates to a method and composition for controlling the deposition of alkaline earth compound scale deposits, especially calcium carbonate and calcium phosphate deposits, on the surfaces of an aqueous system. More particularly, this method includes adding to an aqueous system a synergistic composition comprising a polyether polyamino methylene phosphonate and other components.

2. Brief Description of the Background Art

Generally, calcium carbonate and calcium phosphate scale deposits are incrustation coatings which accumulate on the metallic or plastics surfaces of a water-carrying system through a number of different causes.

Various industrial and commercial water-carrying systems are subject to calcium carbonate and calcium phosphate scale formation problems. Calcium carbonate and calcium phosphate scales are of particular concern in heat exchange systems employing water, such as, for example, boiler systems and once-through and open recirculating water cooling systems. Cooling towers are especially significant, particularly where severe conditions including high pH and high calcite concentrations are encountered.

The water employed in these systems ordinarily will contain a number of dissolved salts, and the alkaline earth metal cation calcium is usually prevalent, as are the anions carbonate and phosphate. The combination products of calcium cation and carbonate anion and calcium cation and phosphate anion will precipitate from the water in which the ions are carried to form scale deposits when the concentrations of the anion and cation comprising the reaction product, i.e., calcium carbonate, or calcium phosphate, exceeds the solubility of the reaction product itself. Thus, when the concentration of calcium ion and anion exceed the solubility of the calcium reaction product, a solid phase of calcium carbonate and/or calcium phosphate will form as a precipitate. Precipitation of the reaction product will continue until the solubility product concentration of the constituent ions is no longer exceeded.

Numerous factors may be responsible for producing a condition of supersaturation for the reaction product. Among such factors are changes in the pH of the water system, evaporation of the water phase, rate of heat transfer, amount of dissolved solids, and changes in the temperature or pressure of the system.

For cooling systems and similar heat exchange systems, including cooling towers, the mechanism of scale formation is apparently one of crystallisation of scale-forming salts from a solution which is locally supersaturated in the region adjacent the heating surface of the system. The thin viscous film of water in this region tends to become more concentrated than the remainder of the solution outside this region. Precipitation is also favoured on the heat transfer surface because of the inverse solubility relationship of calcium carbonate. As a result, the solubility of the scale-forming calcium carbonate salt reaction product is first exceeded in this thin film, and crystallisation of calcium carbonate scale results directly on the heating or heat exchange surface. It will be understood by those persons skilled in the art that the present invention will also prevent the bulk precipitation of scale forming salts which may be transported within the aqueous system to the heating or heat exchange surfaces.

In addition to this, a common source of scale in boiler systems is the breakdown of calcium bicarbonate to form calcium carbonate, water and carbon dioxide under the influence of heat. For open recirculating cooling water systems, in which a cooling tower, spray pond, evaporative condenser, and the like serve to dissipate heat by evaporation of water, the chief factor which promotes calcium carbonate scale formation is concentration of solids dissolved in the water by repeated evaporation of portions of the water phase. Thus, even a water which is not scale forming on a once-through basis usually will become scale forming when concentrated two, four or six times. Moreover, alkalinity of the make-up water, with evaporative cycles over time results in an increasing alkalinity of the water in the overall system, often having pHs of 8.5-9.5 and even higher. Conventional scale inhibiting compositions typically fail in systems having such severe conditions.

The formation of calcium carbonate and calcium phosphate scale deposits poses a serious problem in a number of regards. The calcium scale which is formed possesses a low degree of heat conductivity. Thus, a calcium scale deposit is essentially an insulating layer imposed across the path of heat travel from whatever source to the water of the system. In the case of a cooling system, the retarded heat transfer causes a loss in cooling efficiency. Consequently, calcium scale is an expensive problem in many industrial water systems, causing delays and shutdowns for cleaning and removal.

Although the present invention is directed primarily to preventing or inhibiting the deposition of calcium carbonate and calcium phosphate scale, it is also applicable to inhibiting the deposition of other types of alkaline earth metal scales, especially those associated with calcium carbonate scale under the severe conditions described herein.

For example, most industrial and commercial water contains alkaline earth metal cations, such as calcium and magnesium, etc., and several anions such as bicarbonate, carbonate, and phosphate. When combinations of these anions and cations are present in concentrations which exceed the solubility of their reaction products, precipitates form until their product solubility concentrations are no longer exceeded. These precipitates are alkaline earth metal scales. Thus, by alkaline earth metal scales is meant scales including but not limited to calcium carbonate, calcium phosphate and magnesium carbonate. These scales form frequently in the tubes of heat exchangers and on other heat exchange surfaces, such as those in cooling towers. Particular systems or applications areas where severe conditions lead to exceptional build-up of calcium carbonate and calcium phosphate scales, in addition to cycled up cooling towers, include reverse osmosis systems, sugar refining evaporators and certain types of gas scrubbers.

Scale-forming compounds can be prevented from precipitating by inactivating their cations with chelating or sequestering agents, so that the solubility of their reaction products is not exceeded. Generally, this requires many times as much chelating or sequestering agent as cation, since chelation is a stoichiometric reaction; these amounts are not always desirable or economical. However, several decades ago, it was discovered that certain inorganic polyphosphates would prevent such precipitation when added in amounts far less than the concentrations needed for sequestering or chelating.

When a precipitation inhibitor is present in a potentially scale-forming aqueous system at a markedly lower concentration than that required for sequestering the scale-forming cation (stoichiometric), it is said to be present in "threshold" amounts. See, for example, Hatch and Rice, *Indust. Eng. Chem.* 31, 51-53 (1939); Reitemeier and Buehrer, *J. Phys. Chem.,* 44(5), 535-536 (1940); Fink and Richardson, U.S. Patent No. 2, 358,222; and Hatch, U.S. Patent No. 2,539,305.

Similarly, anionic and cationic polymers can be used as dispersants in accordance with methods known in the art, but the dosage levels necessary to achieve dispersion are in the range of 0.5-1.0% by weight of the aqueous system being treated, which is many orders of magnitude higher than the dosage levels desirable. Thus, it is an object of the present invention that it is possible to achieve essentially non-adherent scale using only threshold inhibitor dosage levels of a scale-controlling composition.

Recently, attention has been focused on controlling scaling under severe conditions, where conventional treatments such as those described above do not provide complete scale control for calcium carbonate and calcium phosphate. Current technology in scale control can be used to inhibit $CaCO_3$ scale up to 100 to 120 times calcite saturation, i.e., a water containing $Ca^{2+}$ and $CO_3^{2-}$ present at 100 times (100X) the solubility limit of calcium as calcite (calcite is the most common crystalline form of calcium carbonate). However, what is desired are inhibitors effective in greater than 100X water, where the calcite ions can be prevented from precipitating as calcium carbonate scale and also wherein the inhibitors are effective in inhibiting the formation of calcium phosphate scale as well, using substoichiometric amounts of an inhibitor. Therefore, it is a particular object of the present invention to provide scale-controlling compositions which are especially useful under severe conditions characterised by a calcite saturation level of greater than 150X as defined in the paragraph immediately below, for the control of both calcium carbonate and calcium phosphate scales.

Severity of the scaling tendency of a water sample is measured using the saturation index, which may be derived in accordance with the following equation:

$$SI = \frac{[Ca^{2+}]\,[CO_3^{\ 2-}]}{K_{sp}CaCO_3}$$

where SI is the saturation index for calcium carbonate, $[Ca^{2+}]$ is the concentration of free calcium ions, $[CO_3^{2-}]$ is the concentration of free carbonate ions, and $K_{sp}CaCO_3$ is the conditional solubility product constant for $CaCO_3$. All of the quantities on the right side of the above equation are adjusted for pH, temperature and ionic strength.

Calculation and use of the saturation index, and generation of the data from which it is derived, are matters within the skill of the art. See, for example, *Critical Stability Constants,* Vol. 4: "Inorganic Complexes", Smith & Mantell (1976), Plenum Press; and *Aquatic Chemistry,* Chap. 5, 2nd ed., Stumm & Morgan (1981), Wiley & Sons.

Another characteristic feature of the severe conditions under which the scale controlling methods of the present invention are especially useful is high pH, greater than about 8.5. A related feature of such severe conditions is high alkalinity.

Calcium tolerance is a measure of a chemical compound's ability to remain soluble in the presence of calcium ions ($Ca^{2+}$]. One of the parameters of scale control under severe conditions is pH. As pH increases, calcium tolerance decreases rapidly for traditional $CaCO_3$ threshold inhibitors, e.g., 1-hydroxyethylidene-1,1-diphosphonic acid (HEDP) and amino tri(methylene phosphonic acid) (AMP). These inhibitors precipitate with calcium at alkaline pH's, rendering them useless as threshold scale inhibitors.

Early efforts to reduce scale formation in water-carrying systems employed compounds such as tannins,

modified lignins, algins, and other similar materials. Chelating or sequestering agents have also been employed to prevent precipitation or crystallisation of scale-forming calcium carbonate. Another type of agent which has been actively explored heretobefore as a calcium carbonate scale inhibiting material is the threshold active inhibitor. Such materials are effective as scale inhibitors in amounts considerably less than stoichiometrically required, and this amount, as already mentioned, is termed the threshold amount. Inorganic polyphosphates have long been used as such threshold active inhibitors. For examples of such materials, see Fink - U.S. Pat. No. 2,358,222; Hatch - U.S. Pat. No. 2,539,305; and Ralston - U.S. Pat. No. 3,434,969. Certain water soluble polymers, including groups derived from acrylamide and acrylic acid have been used to condition water containing scale-forming calcium carbonate. For example, See U.S. Pat. Nos. 2,783,200; 3,514,476; 2,980,610; 3,285,886; 3,463,730; 3,518,204; 3,928,196; 3,965,017; and 4,936,987. In particular, there has been employed anionic polyelectrolytes such as polyacrylates, polymaleic anhydrides, copolymers of acrylates and sulfonates, and polymers of sulfonated styrenes. See, for example, U.S. Pat. No. 4,640,793; 4,650,793; 4,650,591; 4,457,847; and 4,671,888. However, when used as threshold alkaline earth metal scale inhibitors, large dosages of these polymers are required, which in turn increases operating costs.

While polyether polyamino methylene phosphonates are known for their use for the control of alkaline earth metal scale having severe conditions wherein the pH is at least 8.5 and the calcite saturation is at least 150 times the solubility limit of calcium as calcite, U.S. Patent Nos. 5,338,477 and 5,353,642, an aqueous system treated in accordance with the instant invention has not heretobefore been suggested. Further, as demonstrated herein, use of the polyether polyamino methylene phosphonates alone for the control of alkaline earth metal scales such as calcium carbonate and calcium phosphate simultaneously requires large dosages making the use of the polyether polyamino methylene phosphonate alone expensive and therefore increasing operating costs to an unacceptable level.

In spite of this background material, there remains a very real and substantial need for a synergistic composition and a method of use of the same for inhibiting the formation, deposition and adherence of scale forming salts in an aqueous system, such as for example, but not limited to, a cooling tower.

## SUMMARY OF THE INVENTION

According to the present invention in a first aspect there is provided a method for controlling the deposition of alkaline earth metal compounds as scale deposits in an aqueous system wherein the pH is at least 8.5 and the calcite saturation level is at least 100 times the solubility limit of calcium as calcite, which method includes adding to the aqueous system a synergistic effective amount of a composition, herein called "Composition X", comprising components (A) to (D) as follows:

component (A) a polyether polyamino methylene phosphonate of the formula:

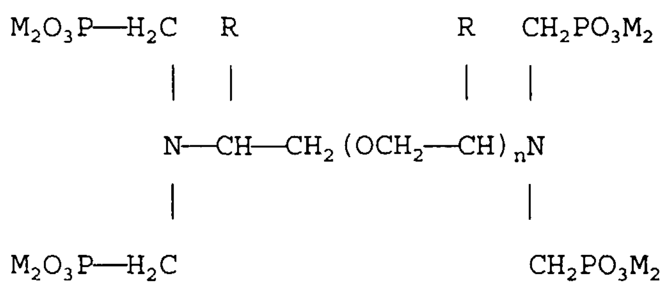

(I)

where n is an integer or fractional integer which is, or on average is, from 1 to 12, inclusive; M is hydrogen or an alkali metal; and each R may be the same or different and is independently selected from hydrogen and methyl;
Component (B) : a component comprising either a terpolymer comprising the monomers of acrylic acid, sulfophenoxymethallyl ether and maleic acid, wherein the weight average molecular weight for said terpolymer is in the range from about 4,000 to 10,000, or a composition comprising a mixture of a polymaleic acid and a copolymer of acrylic acid and sulfophenoymethallyl ether having a weight average molecular weight of from 4,000 to 10,000;
Component (C): a hydroxyphosphonoacetic acid; and
Component (D) : a phosphonocarboxylic acid copolymer comprising the monomers of acrylic acid telomer with (1-hydroxy-1-methylethyl) phosphinic acid monosodium salt and 2-acrylamido 2 methyl propane sulfonic acid.

Preferably, for the polyether polyamino methylene phosphonate, component (A), M is hydrogen, each R is

methyl, and n is 2 to 4, and more preferably wherein n is an average of about 2.6.

Preferably, in Composition X the weight ratio of component (A), polyether polyamino methylene phosphonate : component (B), terpolymer : component (C), hydroxyphosphonoacetic acid : component (D), phosphonocarboxylic acid copolymer ranges from about 4:8:1:3 to about 5:10:1:4.

In a preferred embodiment of this invention, component (B) of Composition X comprises from 80 to 90%, preferably about 84 percent, acrylic acid, from 5 to 10, preferably 8.0 weight average molecular weight percent sulfophenoxymethallyl ether, and from 5 to 10 preferably about 8.0 weight average molecular weight percent maleic acid.

In the method of the first aspect there may also be added to the aqueous system a stabiliser for preventing decomposition of the polyether polyamino methylene phosphonate component (A), employed in Composition X.

In the method of the first aspect there may also be added to the aqueous system a corrosion inhibitor. The corrosion inhibitor may comprise, for example, but is not limited to, a steel and/or copper corrosion inhibitor(s).

In component (B) the weight ratio of acrylic acid : sulfophenoxymethallyl ether preferably ranges from 3:1 to 18:1.

In the method according to the first aspect of the present invention the concentrations of components (A), (B), (C) and (D) in water established by addition of Composition X to the aqueous system are preferably as follows:

Component (A): at least 1.0 mg/L
Component (B): at least 2.0 mg/L
Component (C): at least 0.2 mg/L
Component (D) : at least 0.75 mg/L

According to the present invention in a second aspect there is provided a composition which comprises Composition X as defined hereinbefore.

## DESCRIPTION OF THE INVENTION

The instant invention is directed to treatment of an aqueous system containing scale forming salts using Composition X as set forth herein, and thereby inhibiting the formation, deposition, and adherence of scale forming salts in the aqueous system.

As used herein the phrases "inhibiting the precipitation" and "inhibiting the deposition" include threshold inhibition, dispersion, solubilisation, or particle size reduction. The phrase "inhibiting the adherence" and "increasing the non-adherence", define the formation of a scale deposit which is easily removed, e.g., by simple rinsing, i.e., a scale deposit which is not so firmly bonded to the surface to which it is attached that it cannot be removed by simple physical means as opposed to harsh mechanical or chemical treatment.

As used herein, the phrase "scale-forming salts" includes any of the scale-forming salts, including, but not limited to, calcium carbonate, calcium sulfate, calcium phosphate, calcium phosphonate (including calcium hydroxyethylidene diphosphonic acid), calcium oxalate, calcium fluoride, barium sulfate and magnesium salts.

As used herein, the phrase "aqueous system" refers to commercial or industrial system utilising water and involving heat exchange surfaces, usually of metal, including, but not limited to, cooling water systems, especially cooling towers, boiler water systems, desalination systems, gas scrubbers and thermal conditioning equipment. Of particular importance are those systems which operate under severe conditions as detailed herein, including high pH and high calcite concentrations. Typical of such systems are cycled up cooling towers, reverse osmosis systems, sugar refining evaporators and gas scrubbers.

In order to obtain high levels of control of scale deposits, especially under the severe conditions defined herein, it has been found that there are certain desirable components of the structure of the polyether polyamino methylene phosphonate, component (A) of Composition X the present invention which are necessary to provide that performance. Thus, e.g., the tetra(aminophosphonate) portion of the structure is essential. Whether these groups are present initially in the phosphonic acid form or as an alkali metal or other salt of the acid, has no real bearing on the performance of the overall molecule. At the pH's under which the compositions of the present invention function, they are, and must be, in their ionised form. Thus, it is not critical whether "M" is hydrogen or a suitable cation, and the selection of an appropriate salt form is well within the skill of the art. As alternatives to alkali metal salts, ammonium salts containing the cation $NH_4^+$, or ammonium derivative salts, eg. containing the cation $NR_4^+$ (R=alkyl etc.), or mixtures thereof, may be used. Alkali metal salts are the most simple, and are preferred for that reason.

A desirable, although not essential structural feature of the polyether polyamino methylene phosphonate, component (A), useful in the aqueous system and methods of the present invention is the isopropyl group which bridges the diphosphonomethylamino group and the polyether group:

$$\begin{array}{c} CH^{3} \\ | \\ -CH-CH_2- \end{array}$$

The isopropyl group has been found to provide enhanced scale inhibition activity under the severe conditions defined herein.

The next structural element of the polyether polyamino phosphonates of formula (I) to be considered is the polyether moiety:

$$\begin{array}{c} R \\ | \\ (OCH_2-CH)_n \end{array}$$

R may be hydrogen or methyl, and thus the polyether moiety is either polyoxyethylene or polyoxypropylene, with the polyoxypropylene being preferred. Since the polyether polyamino methylene phosphonates are prepared by phosphonomethylation of the appropriate diamine, the character of the polyether moiety will depend upon the way in which the amine starting material is made. Processes for making such polyether diamines are known in the art; and attention is directed particularly to U.S. Pat. No. 3,236,895, which describes preparation of a variety of polyether diamines especially useful in preparing the phosphonate final products (A), as described herein, used in synergistic combination as deposit control agents in the present invention.

In accordance with the processes set out in U.S. Pat. No. 3,236,895 and related processes described in the prior art, it is possible to prepare any one of a number of desired polyether diamines within the scope of the definition of component (A). In the general formula (I) for the polyether polyamino methylene phosphonates, component (A), used herein, the polyether moiety is simply represented by the formula above. Since R may be hydrogen or methyl, both ethyleneoxy and propyleneoxy units are possible, as already mentioned. Moreover, R is to be independently chosen, i.e., ethyleneoxy and propyleneoxy units may alternate in various patterns, including blocks of each, or they may be all one or the other. For example, the following are just some of the polyether segments which might be prepared to form the basis for the corresponding diamines, which would then be used to make phosphonates within the scope of the present invention (where EO=ethyleneoxy, and PO=propyleneoxy):

EO:PO; EO-EO; PO-PO; EO-PO; EO-EO-EO;
PO-PO-PO; EO-EO-PO; EO-PO-PO; EO-PO-EO;
PO-EO-PO; EO-EO-EO-EO; PO-PO-PO-PO; EO-PO-PO-PO;
EO-EO-PO-PO; EO-EO-EO-PO; EO-PO-EO-PO;
EO-PO-PO-EO; PO-EO-EO-PO

In the above examples, "n" in the main formula (I) is defined as being from 1 to 12 and is preferably from 2 to 12. However, it has been found that generally the polyether polyamino methylene phosphonates of lower molecular weight, i.e., where "n" is a smaller integer, e.g. 1 to 4, are those which provide the greatest amount of scale inhibition under the severe conditions of high pH and high calcite concentration, and thus are those which are preferred. Examples of some of these preferred phosphonates for use as component (A) in Composition X are shown in Table 1 below, where Z = methylenephosphonate:

TABLE 1

$$Z_2\text{-}N\text{-}\underset{\displaystyle R_z}{\overset{|}{C}}HCH_2\text{-}(OCH_2\underset{}{CH})_a\text{-}(OCH_2CH)_b\text{-}NZ_2$$

(with $R_z$ on the first CH, $R_a$ on the CH of the a-unit, and $R_b$ on the CH of the b-unit)

| Id. No. | a | b | $R_z$ | $R_a$ | $R_b$ |
|---|---|---|---|---|---|
| A | 2 | 1 | $CH_3$ | H | $CH_3$ |
| B | 2.6* | 0 | $CH_3$ | $CH_3$ | -- |
| C | 2 | 0 | $CH_3$ | $CH_3$ | -- |
| D | 8.5* | 1 | $CH_3$ | H | $CH_3$ |
| E | 5.6* | 0 | $CH_3$ | $CH_3$ | -- |
| F | 2 | 0 | H | H | -- |
| G | 3 | 0 | H | H | -- |
| H | 3 | 0 | $CH_3$ | $CH_3$ | -- |
| I | 3 | 1 | H | $CH_3$ | H |
| J | 4 | 0 | H | $CH_3$ | -- |

* = the value of "n" on average.

It will be noted from Table 1 above that in several cases, "n" has an average value, i.e., the number of repeating ethyleneoxy or propyleneoxy units may vary. Thus, it is possible to have a mixture of varying chain lengths of polyoxyethylene or polyoxypropylene in the final product. This is also contemplated to be within the scope of the present invention, so long as the requirements with respect to the limits of "n" are observed. Consequently, while "n" is merely defined as an integer or fractional integer which is, or on average is, from 1 to 12, it has two aspects. It defines the total of the number of repeating ethyleneoxy and/or propyleneoxy units considered separately, and thus if "n" is, e.g., 4, it includes 4 propyleneoxy units, 3 propyleneoxy units and 1 ethyleneoxy units, 2 propylenoxy units and 2 ethyleneoxy units, and so forth. The value of "n" may also represent an average number, and this is always the case, of course, when it is a fractional integer. In this case, for each of the ethylenoxy and/or propyleneoxy units considered separately, mixtures of these units may be present so as to give an average value for "n". For example, in the table above, for Id. No. D, the total of "a" and "b" is 9.5, which is the value of "n". What is described is a mixture of polyether phosphonates in which all of them have an isopropyl bridging group and an ethyleneoxy moiety, but the repeating propyleneoxy units are such that on average their value is about 8.5.

The number of repeating ethyleneoxy or oxypropylene units, designated by the subscript "n", determines the total molecular weight of the overall polyether polyamino methylene phosphonate comprising component (A), and thus plays a critical role in determining the scale inhibiting performance of that phosphonate. It has been found that in order

to provide adequate scale control using the synergistic Composition X under the severe conditions of use defined herein, it is necessary that "n" is an integer or fractional integer which is, or on average is, from 1 to 12, preferably 2 to 12, inclusive.

As discussed above, the reason for "n" being potentially a fractional integer arises from the fact that the primary diamine from which the polyether polyamino methylene phosphonates are prepared by phosphonomethylation may be a mixture of polyethers in which "n" is two or more of 2, 3, 4, 5 and so forth, in varying proportions. For example, a preferred polyether polyamino methylene phosphonate for use in the aqueous system and methods of the present invention has a molecular weight of approximately 632 and the value of "n" on average is about 2.6. Thus, this type of polyether phosphonate has a molecular weight distribution, i.e., of the various polyoxypropylenes which make it up, and this distribution is represented by a fractional integer average value for "n". But, it is also within the scope of the present invention for "n" to be a whole integer, e.g., "3", which usually designates a single molecular weight and not a molecular weight distribution.

The polyether polyamino methylene phosphonates, components (A) of the synergistic Composition X of the present invention, may be prepared first by phosphonomethylation of the appropriate primary diamine which already contains the polyoxyethylene and polyoxypropylene moieties.

Such primary amine starting materials and their methods of preparation are well known. The phosphonomethylation of the primary diamine may then be carried out by a Mannich reaction such as that described in K. Moedritzer and R. Irani, *J. Organic Chem.* 31(5) 1603-7, "The Direct Synthesis of alpha-Aminomethyl Phosphonic Acids; Mannich-Type Reactions with Orthophosphorous Acid", May 1966. In a typical reaction, the primary diamine is added to a mixture of phosphorous acid and water, and concentrated hydrochloric acid is then added slowly, after which the reaction mixture is heated to reflux with addition of aqueous formaldehyde.

Although the general structural formula (I) employed herein indicates that the nitrogen atom is completely phosphonomethylated, as a practical matter, preparation of the polyether polyamino methylene phosphonates of the present invention, as described in detail further below, usually results in only about 80% to 90% phosphonomethylation. Other side products give N-substitution with H, $CH_3$, $CH_2OH$, etc. It is not desirable, as a matter of simple production economics, however, to isolate and purify the completely phosphonomethylated compounds, since the side products just described do not interfere with scale deposit inhibition. Such side products, are consequently, usually allowed to remain, and the test data set out further below is based on test samples containing such side products. Consequently, the activity levels obtained would be even higher were 100% active compound being tested.

A specific method of the preparation of the preferred polyether polyamino methylene phosphonate, N,N,N',N'-tetramethylene phosphono polyoxypropylene diamine, is set forth as follows.

A diamine having an average molecular weight of about 230 and having the structural formula:

$$H_2NCH(CH_3)\text{-}CH_2\text{-}[\text{-}OCH_2CH(CH_3)\text{-}]_{2.6}\text{-}NH_2 (56.2\ g)$$

is added to a mixture of phosphorous acid (82 g) and deionized water (65 g) in a one litre resin flask fitted with a condenser, a Teflon® (DuPont) stirrer, a thermometer and an addition funnel. It is important to maintain as low a level of iron (Fe) in the reaction mixture as possible, and the most likely source of Fe is the phosphorous acid. The Fe interferes somewhat with the reaction, and consequently a low Fe content phosphorous acid is employed.

There is then added slowly to the reaction mixture 50 mL of concentrated HCl. The reaction mixture is subsequently heated to reflux (107°C). The temperature should be at least 95°C, but the best results are obtained when the reaction mixture is heated to reflux. After the reaction mixture reached reflux, there is added 150 g of 37% aqueous HCHO, which is added dropwise over a period of about 45 min. In order to obtain the best results, the ratio of HCHO to diamine starting material should be at least 4:1 on a molar basis, and preferably somewhat higher, as was the case in this synthesis.

The reaction mixture is then refluxed for an additional period of 3 hrs. While the reaction time depends upon temperature, best results are obtained by refluxing for at least ½ hr., preferably 2 to 3 hrs.

The reaction mixture is then cooled, and 97.2 g of volatiles are stripped off at 50°C using a rotary evaporator.

In operation of the specific method described we found that a total of 303.4 g of product was obtained, with a theoretical activity of 48%. $^{31}P$-NMR indicated that at least about 85% of the -NH groups has been phosphonomethylated. Impurities included unreacted phosphorous acid, formaldehyde, phosphoric acid, methanolphosphonic acid, and other unidentified phosphorous compounds.

When any of the polyether polyamino methylene phosphonates, component (A) of Composition X of the present invention, are used as described in Composition X to inhibit the precipitation deposition, deposition, and adherence of scale-forming salts in the aqueous system, they can be effectively employed for that purpose when added in amounts sufficient to establish a concentration in the aqueous system of from 1 to 100 mg/L. Preferably, the amount of component (A) added will be sufficient to establish a concentration of at least about 6.0 mg/L when the aqueous

system has a calcite saturation level of at least 150X as described herein. It is understood, however, that many factors, of the type which have been explained in detail with regard to the background to the present invention, will determine the actual amount of the polyether polyamino methylene phosphonate compositions of the synergistic combination of the present invention which will be added to any particular aqueous system in order to achieve the maximum amount of inhibition of alkaline earth metal, particularly, for example, calcium carbonate scale and calcium phosphate scale formation, deposition and adherence in that aqueous system. The calculation of those amounts is well within the skill of the person skilled in this art.

Component (B) of Composition X of the present invention is preferably present in the aqueous system as described herein, to establish a concentration of preferably from 2.0 mg/L to 50 mg/L of component (B). Preferably, component (B) is present in the aqueous system to establish a concentration of at least about 6.0 mg/L when the aqueous system has a calcite saturation level of at least 150X, as described herein.

Component (B) described herein may be prepared by conventional methods known by those skilled in the art, and, as a terpolymer, is commercially available from Alco Chemical, Chattanooga, Tennessee, U.S.A. as "AR540" composition. "AR540" is a trademark of Alco Chemical.

For example, component (B) where a terpolymer, as described herein may be prepared by slowly adding acrylic acid monomer to an aqueous mixture containing maleic acid and sulfophenoxymethallyl ether. The aqueous mixture further contains an initiator, such as, for example, either sodium hypophosphite or sodium persulfate. The aqueous mixture is then refluxed for several hours from about 90°C to 105°C. The molecular weight may be controlled by adding a chain terminator such as, for example, mercaptan or ispropranol. Thereafter, a caustic such as, for example, an ammonium salt may be added to partially neutralise the acid. It is within the skill of those skilled in the art to employ sufficient amounts of the above starting materials to prepare component (B) as a terpolymer. Component (B) where a composition of a polyacrylic acid and a copolymer may similarly be prepared in a known way.

The hydroxyphosphonoacetic acid, component (C) of the synergistic Composition X may be present in the aqueous system to establish a concentration of from 0.20 mg/L to 15 mg/L, and more preferably from about 0.20 mg/L to 10 mg/L. The hydroxyphosphonoacetic acid, component (C) may be prepared by conventional methods known by those skilled in the art, and is commercially available from FMC Corporation, Princeton, New Jersey as "Belcor 575" composition. "Belcor 575" is a trademark of FMC Corporation.

For example, the (C) hydroxyphosphonoacetic acid, component (C) as described herein, may be prepared by reacting sodium hypophosphite with glyoxylic acid or pyruvic acid, respectively, in an aqueous medium, such as, for example, distilled water. The reaction is carried out at elevated temperature, such as, for example, from about 60°C to 110°C in the aqueous reaction medium, under reflux conditions. The reaction is held at this reflux temperature and the progress of the reaction is monitored by $^{31}$P-NMR analysis. The reaction is stopped after 9 hours. It is within the skill of those skilled in the art to employ sufficient amounts of the above starting materials to prepare the hydroxyphosphonoacetic acid.

The phosphonocarboxylic acid copolymer, component (D) of the synergistic Composition X, comprises the monomers of acrylic acid, telomer with (1-hydroxy-1-methyl ethyl) phosphinic acid monosodium salt and 2 acrylamido 2 methyl propane sulfonic acid. The phosphonocarboxylic acid copolymer, component (D) may comprise an aqueous solution of phosphonocarboxylic acid sodium salt having a CAS registry number of CAS Number 156105-39-4, as will be understood by those skilled in the art. CAS Number 156105-39-4 describes this product as 2-propenoic acid telomer with (1-hydroxy-1-methylethyl) phosphinic acid monosodium salt and 2-methyl-2-[(1-oxo-2-propenyl) amino]-1-propane sulfonic acid monosodium salt, peroxydisulfuric acid ($[(HO)S(O)_2]_2 0_2$) disodium salt initiated, oxidised, sodium salts. This phosphonocarboxylic acid copolymer may be prepared by conventional methods known by those skilled in the art, and is commercially available from FMC Corporation, Princeton, New Jersey as "Belclene 494" composition. "Belclene 494" is a trademark of FMC Corporation.

For example, the phosphonocarboxylic acid copolymer, component (D), may be prepared by copolymerizing monomers comprising a carboxylic acid (such as for example acrylic acid and methacrylic acid) and 2-acrylamido 2methyl propane sulfonic acid by employing organic hypophosphite compound as polymer initiator or a chain terminator, as is well known by those skilled in the art, such that the phosphorous containing moiety, such as the phosphonate group, is attached at the terminal point of the polymer chain, as will be understood by those skilled in the art.

The phosphonocarboxylic acid copolymer component (D) of Composition X may be present in the aqueous system, as described herein, to establish a concentration of preferably from 0.75 mg/L to 30 mg/L. Preferably, the phosphonocarboxylic acid copolymer, component D, is present in the aqueous system to establish a concentration of at least about 3.75 mg/L when the aqueous system has a calcite saturation of at least about 150X, as described herein.

The synergistic Composition X of the present invention may beneficially be used in amounts as threshold inhibitors to achieve calcium scale inhibition, rather than sequestering or chelating agents, although Composition X of the present invention also has dispersant properties as well and significantly reduces the adherency of any scale deposit which is formed, facilitating its easy removal.

Thus, it will be appreciated by those skilled in the art that the synergistic Composition X employed in an

aqueous system can increase the amount of scale control and deposit control achieved under the severe conditions described herein more economically than was previously achieved heretobefore.

In addition to the synergistic Composition X other additives may be used in combination with Composition X which increases the effectiveness of the synergistic Composition X. Thus, as noted above, it is desirable to use one or more corrosion inhibitors along with Composition X in order to obtain corrosion rates which are acceptable. These corrosion inhibitors, as further described herein, may be steel and/or copper corrosion inhibitors. Acceptable corrosion rates depend on the circumstances surrounding each particular use environment, but will usually depend to a large degree on expectations with regard to the life expectancy of the equipment present in said environment. Also, acceptable corrosion almost always implies an absence of pitting attack type corrosion. The nature of the equipment involved will depend on the application area, but usually the metals from which such equipment is constructed and which are subject to corrosive attack are, for example, steel in its various common forms, including stainless steel, and copper itself or various alloys thereof, particularly brass. All of these metals are subject to corrosive attack, which, under the severe conditions of use of the aqueous systems treated by the method of the present invention, may be even greater than the extent of corrosive attack that is experienced under more normal conditions; and, therefore, all of these metals, therefore, will benefit from the use of one or more corrosion inhibitors in conjunction with the synergistic Composition X of the present invention.

With regard to corrosion inhibitors for steel and its alloys, it has been found that, surprisingly, not all corrosion inhibitors, including those which perform well with known phosphonate scale inhibitors used in the prior art, and might, therefore, be expected to provide adequate protection, are suitable for use with the synergistic combination of the aqueous system of the present invention. For example, it has been found that the molybdate and nitrite classes of corrosion inhibitors, which usually provide good corrosion protection, especially against pitting attack type corrosion, are not suitable for use with the polyether polyamino methylene phosphonate, component (A), of the synergistic Composition X of the present invention.

On the other hand, there are numerous steel corrosion inhibitors which are suitable, and such suitability can be readily determined by those skilled in the art. Thus it is within the ordinary skill of the artisan to determine which steel corrosion inhibitors would be suitable, and all such inhibitors are contemplated to be a part of the present invention. Having carried out the test procedures referred to above, it has been determined that one of the following steel corrosion inhibitors provide adequate levels of corrosion protection, including protection against pitting attack type corrosion, when used in combination with the synergistic Composition X to treat the aqueous system:

hexametaphosphate,
orthophosphate,
pyrophosphate,
2-phosphonobutane-1,2,4-tricarboxylic acid (PBTC),
manganese [Mn(II)$^{+2}$], and
zinc [Zn(II)$^{+2}$].

The concentration of the steel corrosion inhibitor(s) which is required to provide adequate protection against corrosion will depend on the makeup of the water in the aqueous system being treated, the pH, and the temperature. Generally, however, the desired concentration of the preferred inhibitors recited above will be in the range of from about 0.1 mg/L to about 100 mg/L, preferably from about 1 mg/L to about 25 mg/L, and most preferably from about 1 mg/L to about 10 mg/L.

With regard to corrosion inhibitors for copper and its alloys, again those skilled in the art can readily determine which copper corrosion inhibitors are suitable. For example, following are suitable copper corrosion inhibitors for use with the aqueous system described herein of the present invention:

benzotriazole,
tolyltriazole,
2-mercaptobenzothiazole,
combinations of tolyltriazole and mercaptobenzothiazole as described in U.S. Patent No. 4,675,158,
higher alkylbenzotriazoles of the type described in EP-A-0 397 454, and combinations thereof as described in EP-A-0 462 809,
alkoxybenzotriazoles and combinations thereof as described in EP-A-0 478 247, and
phenyl mercaptotetrazole and combinations thereof as described in EP-A-0 462 666.

The concentration of the desired copper corrosion inhibitor which should be used will depend not only on the inhibitor itself, but on such factors as the yellow metal surface area and total aqueous system volume, the concentration of dissolved and suspended copper, the pH, dissolved solids, and temperature. Generally, however, suitable copper

corrosion inhibitors will be added in a range of concentrations from about 0.1 to about 100 mg/L, preferably from about 0.5 to about 20 mg/L and most preferably from about 1 to about 5 mg/L.

Further, it will be appreciated by those skilled in the art, that other additives which may be added together with the synergistic Composition X to the aqueous system, include for example, a stabiliser for preventing decomposition of component (A), the polyether polyamino methylene phosphonate. It will be understood by those skilled in the art that decomposition of deposit control agents may occur, for example, in the presence of biocide compositions containing, for example, chlorine, bromine or mixtures thereof. It is also known by those persons skilled in the art that aqueous systems commonly contain biocide compositions for microbial control. Examples of a suitable stabiliser that may be added to the aqueous system in the method of the present invention include, but are not limited to, monoethanolamine and an organic sulfonamide comprising the compound of the formula

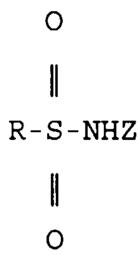

wherein:

Z is selected from hydrogen; and alkali and alkaline earth metal salt-forming ions; and

R is selected from the group consisting essentially of:

a) $C_{1-4}$alkoxy radical: -O$C_{1-4}$alkyl;
b) an amino group, or a mono($C_{1-4}$alkyl)amino or di($C_{1-4}$alkyl)amino group: -N($R^1$)$R^2$, where $R^1$ and $R^2$ are as defined above;
c) a formylamino group: -NHC(O)H;
d) ($C_{1-4}$alkyl)carbonylamino radical:
- NH-C(O)$C_{1-4}$alkyl;
e) ($C_{1-4}$alkoxy)carboylamino radical:
- NH-C(O)O$C_{1-4}$alkyl;
f) $C_{2-6}$alkenyl radical;
g) $C_{2-6}$alkynyl radical;
h) $C_{3-7}$cycloalkyl radical;
i) aryl or heteroaryl selected from the group consisting essentially of phenyl, naphthyl, pyridyl, pyrimidyl, pyrazyl, pyridazyl, pyrrolyl; imidazolyl, pyrazolyl, triazolyl, tetrazolyl; wherein the aryl and carbon atoms of the heteroaryl are optionally substituted with up to three radicals selected from the group consisting essentially of: $C_{1-4}$alkyl, $C_{1-4}$alkoxy, $C_{1-4}$alkoxycarbonyl; halo; nitro; nitrillo; carboxy; $C_{1-4}$alkylsulfonyl radical: -S(O)$_n$$C_{1-4}$alkyl, where n=2; and a sulfamolyl group which is unsubstituted or substituted on the nitrogen by one or two $C_{1-4}$alkyl group: $SO_2$N($R^1$)$R^2$, where $R^1$ and $R^2$ are as defined above; and wherein the nitrogen atom(s) of the heteroaryl is (are) optionally substituted by $C_{1-4}$alkyl of $C_{1-4}$alkylsulfonyl radical:
- S(O)$_n$$C_{1-4}$alkyl, where n=2;
j) $C_{1-4}$alkyl radical; and
k) $C_{1-4}$alkyl monosubstituted by one of the substituents a) through i) above.

Preferred organic sulfonamide stabilising agents for use in the present invention are those set out above wherein R is:

$C_{1-4}$alkoxy radical: -O$C_{1-4}$alkyl;
an amino group, or a mono($C_{1-4}$alkyl)amino or di($C_{1-4}$alkyl)amino group: -N($R^1$)$R^2$, where $R^1$ and $R^2$ are independently H or $C_{1-4}$alkyl;
phenyl mono-substituted by $C_{1-4}$alkyl, $C_{1-4}$alkoxy, or -$SO_2$N($R^1$)$R^2$, where $R^1$ and $R^2$ are as defined above;
$C_{1-4}$alkyl radical; or $C_{1-4}$alkyl monosubstituted by one of the substituents set out immediately above.

An especially preferred class of organic sulfonamides useful in the method of the present invention is that wherein R is phenyl monosubstituted by $C_{1-4}$alkyl, and more particularly, para-substituted by methyl.

The organic sulfonamides described above are, for the most part, known in the art, and methods for their preparation are well known. One satisfactory approach to preparation of these compounds is by sulfonation of the appropriate amine with sulfur trioxide: $SO_3$. Another synthetic approach which may be used to prepare the organic sulfonamide stabilisers of the present invention is by treating ammonia, a primary amine, or a secondary amine with a sulfonyl chloride in the presence of some base. These and other methods are described in *Comprehensive Organic Chemistry: the Synthesis and Reactions of Organic Compounds,* Vol. 3, pp. 345-346, Derek Barton and W. David Ollis, eds., Pergamon Press 1979, as well as the literature references cited therein.

The overall amount, and particularly the concentration of organic sulfonamide stabilising agent which must be employed in the aqueous system and methods of the present invention for inhibiting the degradation of the (A) polyether polyamino methylene phosphonate, component (A) of Composition X, depends on a number of factors, including especially pH, concentration of the chlorine and/or bromine biocide, and temperature and organic and inorganic constituents of the water which makes up the aqueous system being treated. With regard particularly to the concentration of the chlorine and/or bromine biocide in the aqueous system, it is desirable that the corresponding concentration of the organic sulfonamides stabilising agent be in an equivalent weight ratio thereto (sulfonamide:halogen) of from about 0.5 to 2.0, preferably from about 0.75 to 1.25, and most preferably about 1.0. In general terms, the concentration of the organic sulfonamide will be from 0.1 to 100 ppm, preferably from 0.5 to 25, most preferably from 1 to 10 ppm in the aqueous system being treated by the synergistic Composition X of the present invention. For example, the organic sulfonamide stabilising agents of the present invention will be added to the aqueous system at a concentration of between 0.5 and 25 ppm, wherein the aqueous system is at a pH of from 6 to 10, at a temperature of from 10°C to 80°C, and having a chlorine and/or bromine concentration of between about 0.1 and 50 ppm, and usually from about 0.1 to 10 ppm.

In a preferred embodiment of the method of this invention, as described herein, the method provides adding the synergistic Composition X to an aqueous system having a calcite saturation level of at least 150 times the solubility limit of calcium as calcite wherein the polyether polyamino methylene phosphonate, component (A), is present in a concentration of at least about 6.0 mg/L, the component (B) is present in a concentration of at least about 6.0 mg/L, the hydroxyphosphonoacetic acid, component (C), is present in a concentration of at least about 1.0 mg/L, and the phosphonocarboxylic acid copolymer, component (D), is present in a concentration of at least about 3.75 mg/L.

The manner of addition of each component of the synergistic Composition X, and the other optional additives such as for example, the copper corrosion inhibitor, the steel corrosion inhibitor, and/or the stabiliser, as described herein, to the aqueous system in the method of the present invention will be straightforward to a person of ordinary skill in the art. Each component of the synergistic Composition X may be added singularly or in any combination with each other. The order of addition of components (A), (B), (C) and (D) of the synergistic combination to the aqueous system is not important. Similarly, the addition of the corrosion inhibitor(s), and/or stabiliser(s) to the aqueous system of this invention may be accomplished singularly or in combination with each other, and the order of addition is not critical relative to the components of the components (A), (B), (C) and (D). Thus, it will be appreciated by those skilled in the art that the addition of the hereinbefore mentioned components of the components (A), (B), (C) and (D) and the hereinbefore mentioned additives may be accomplished by adding each of components (A), (B), (C), (D), corrosion inhibitor(s), or stabiliser(s), individually as a single additive to the aqueous system, or in any combination of two or more of them to establish the synergistic effect taught by this invention.

Further, the manner of addition of the components (A), (B), (C) and (D), and/or stabiliser(s), and/or corrosion inhibitor(s) is straightforward to a person of ordinary skill in the art. Each of the components may be added in liquid form by mechanical dispensers of known design. They may also be added in diluted liquid form. As discussed hereinbefore, for example, two or more components may be combined for dispensing to the aqueous system; and these in combination may be dispensed in liquid form.

Embodiments of the present invention will now be described by way of example with reference to the following illustrative Examples.

## EXAMPLES

The following Examples demonstrate the benefits of the invention in greater detail. These examples are not intended to limit the scope of the invention in any way. In the Examples the following products were used:

TRC is a polyether polyamino methylene phosphonate, component (A), of formula (I) described hereinbefore, wherein both R's are methyl, M is hydrogen, n is on average 2.6 and the resultant weight average molecular weight is about 600. TRC is commercially available for use in the aqueous system, as described herein, from Calgon Corporation, Pittsburgh, PA, U.S.A.

Belcor 575 is hydroxyphosphonoacetic acid and is commercially available from FMC Corporation, Princeton,

New Jersey, U.S.A.

AR540 is a terpolymer comprising about 84 weight average molecular weight percent acrylic acid, about 8 weight average molecular weight percent sulfophenoxymethallyl ether, and about 8 weight average molecular weight percent maleic acid. AR540 is commercially available from Alco Chemical, Chattanooga, Tennessee, U.S.A.

Belclene 494 is a phosphonocarboxylic acid copolymer comprising the monomers 2-propenoic acid, telomer with (1-hydroxy-1-methylethyl) phosphinic acid monosodium salt and 2-methyl-2-[(1-oxo-2-prolenyl) amino]-1-propane sulfonic acid monosodium salt, having a CAS Number 156105-39-4. Belclene 494 composition is commercially available from FMC Corporation, Princeton, New Jersey, U.S.A.

Examples 1-18

In Examples 1-18 various formulations were tested for their effectiveness in improving the inhibition of the formation, deposition and adherence of calcium carbonate ($CaCO_3$) and calcium phosphate ($CaPO_4$) in an aqueous system at pH 8.5, and calcite saturation at about 100 times the solubility limit of calcium as calcite. In order to demonstrate the improved scale inhibitor performance of the aqueous system of the present invention, the following procedure was used:

Scaling water containing 150 mg/L of $Ca^{+2}$ and 600 mg/L of alkalinity as calcium carbonate and about 2 mg/L of orthophosphate at a pH of about 8.5 and 60°C to achieve a calcite saturation of about 100X was used to evaluate scale inhibition performance of test solutions (Examples 1-18) over a 24 hour period. Test solutions were analysed by withdrawing 10 grams of test solution and adding to it an appropriate container through a 0.2 micron filter and titrating for calcium by the Schwarzenbach method and $PO_4^{3-}$ by using the spectrophotometric method known by those skilled in the art, and calculating the percent inhibition by methods known by those skilled in the art. The make-up of the test solutions of each example is set forth in Table 2 as follows. Table 2 also shows the results of the above scale inhibiting activity evaluations over a time period of 24 hours, wherein the percent (%) inhibition of calcium carbonate ($CaCO_3$) and calcium phosphate ($CaPO_4$) was calculated at 24 hours for each Example.

Table 2

| | AR540, | Belcor-575, | Belclene 494 | TRC | % Inhibition | |
|---|---|---|---|---|---|---|
| Example | mg/L | mg/L | mg/L | mg/L | $CaCO_3$ | $CaPO_4$ |
| 1 | 2 | - | - | - | 37 | 69 |
| 2 | 2 | - | - | - | 35 | 72 |
| 3 | - | 1 | - | - | 40 | 17 |
| 4 | 2 | - | - | 1 | 92 | 89 |
| 5 | 2 | 1 | - | - | 53 | 80 |
| 6 | - | 1 | - | 1 | 100 | 50 |
| 7 | 2 | 1 | - | 1 | 100 | 100 |
| 8 | - | - | - | 6 | 100 | 42 |
| 9 | - | - | - | 25 | 100 | 100 |
| 10 | 4 | - | - | - | 69 | 100 |
| 11 | - | 2.5 | - | - | 61 | 27 |
| 12 | 4 | - | - | 6 | 100 | 100 |
| 13 | 4 | 2.5 | - | - | 76 | 100 |
| 14 | - | 2.5 | - | 6 | 100 | 44 |
| 15 | - | - | 5 | - | 35 | 25 |
| 16 | - | 1 | 4 | - | 50 | 25 |
| 17 | 2 | 0.25 | 0.75 | 1 | 100 | 100 |
| 18 | 2 | 0.20 | 0.80 | 1 | 100 | 100 |

Examples 1 to 3, 8, 10, 11 and 15 in Table 2, show that each component of the synergistic Composition X of

the present invention when used individually in an aqueous system having scaling water containing 150 mg/L $Ca^{+2}$, 600 mg/L of alkalinity as calcium carbonate and about 2 mg/L orthophosphate at a pH of about 8.5, as described hereinbefore, do not achieve sufficient inhibition of calcium carbonate and calcium phosphate scale at a calcite saturation at about 100 times (100X) the solubility limit of calcium as calcite.

Examples 4 to 6, and Example 16 show that when a combination of any two components of the Composition X are used together, inhibition of both calcium carbonate and calcium phosphate is not achieved. Example 7 shows that the synergistic Composition X of the present invention wherein 1 mg/L of TRC (polyether polyamino methylene phosphonate (A) of the formula, as described herein), 1 mg/L of Belcor 575 (hydroxyphosphonoacetic acid), and 2 mg/L AR540 (terpolymer as described herein) effectively inhibits 100% of the formation of both calcium carbonate and calcium phosphate scales. However, the use of Belcor-575 at a concentration of 1 mg/L in the composition as set forth in Example 7 in the aqueous system having a calcite saturation at about 100X the solubility limit of calcium as calcite, is not cost effective due to the high economic costs associated with Belcor-575. Thus, use of Belcor-575 at a concentration of 1 mg/L in such an aqueous system is a disadvantage to improving the operating costs of the process using the aqueous system.

Examples 8, 10 and 11 show that increasing the concentration of a single component alone (of the components employed in Composition X of the present invention) does not achieve sufficient inhibition of both calcium carbonate and calcium phosphate scale formation. Example 9 shows that use of TRC alone at a concentration of 25 mg/L inhibits 100% of both calcium phosphate and calcium carbonate scales, however, achieving a concentration of at least 25 mg/L of TRC is expensive, and thus a disadvantage to improving the operating costs of the process using the aqueous system with TRC alone.

Example 12 shows that employing a concentration of 4 mg/L of AR540 and 6 mg/L of TRC effectively inhibits 100% of the formation of calcium carbonate and calcium phosphate scale. While the composition set forth in Example 12 effectively inhibits the scale formation, it is less economical to employ in a process having the aqueous system of the present invention when compared to the synergistic combination of the present invention described in Examples 17 and 18.

Examples 13 and 14 show that employing higher concentrations of either a combination of AR540 and Belcor-575, or a combination of Belcor-575 and TRC do not achieve sufficient inhibition of both the formation of calcium carbonate and calcium phosphate scales in the aqueous system.

Example 16 shows that a combination employing a concentration of 1 mg/L of Belcor-575 and 4 mg/L of Belclene 494 does not achieve sufficient inhibition of calcium carbonate or calcium phosphate scales in the aqueous system.

Examples 17 and 18 show that the use of an example of the synergistic Composition X of the present invention effectively inhibits 100% of both calcium carbonate and calcium phosphate scales. Examples 17 and 18 show that an example of the synergistic Composition X of the present invention employing a concentration of 1 mg/L of TRC, 2 mg/L or AR540, and either 0.25 mg/L Belcor-575 and 0.75 mg/L Belclene 494 (Example 17) or 0.20 mg/L Belcor-575 and 0.80 mg/L Belclene 494 (Example 18), provides an economically advantageous way of achieving 100% inhibition of both calcium carbonate and calcium phosphate scale formation relative to aqueous systems having a calcite saturation level of at least about 100X.

<u>Examples 19-30</u>

In Examples 19 to 30, various formulations were tested for their effectiveness in improving the inhibitor of the formation, deposition and adherence of calcium carbonate and calcium phosphate. In order to demonstrate the improved scale inhibition performance of the aqueous system of the present invention, the following procedure was used:

Scaling water containing 150 mg/l of $Ca^{+2}$ and 600 mg/L of alkalinity as calcium carbonate and about 2 mg/L of orthophosphate at pH of about 8.8 and 60°C Centigrade to achieve a calcite saturation of about 150X was used to evaluate scale inhibition performance of test solutions (Examples 19-30) over a 24 hour period. Test solutions were analysed by withdrawing 10 grams of test solution and adding it to an appropriate container through a 0.2 micron filter and titrating for calcium by the Schwarzenbach method and $PO_4^{3-}$ by using the spectrophotometric method known by those skilled in the art and calculating the percent inhibition by methods known by those skilled in the art. The make-up of the test solutions of each example (Examples 19-30) is set forth in Table 3 as follows. Table 3 also shows the results of the above scale inhibitor activity evaluations over a time period of 24 hours, wherein the percent (%) inhibition of calcium carbonate and calcium phosphate was calculated at 24 hours for each example.

Table 3

| | AR540, | Belcor-575, | Belclene 494 | TRC | % Inhibition | |
|---|---|---|---|---|---|---|
| Example | mg/L | mg/L | mg/L | mg/L | $CaCO_3$ | $CaPO_4$ |
| 19 | - | - | - | 6 | 87 | 27 |
| 20 | 4 | - | - | - | 60 | 49 |
| 21 | - | 2.5 | - | - | 69 | 29 |
| 22 | 4 | - | - | 6 | 89 | 80 |
| 23 | 4 | 2.5 | - | - | 80 | 39 |
| 24 | - | 2.5 | - | 6 | 97 | 11 |
| 25 | 2 | 1 | - | 1 | 65 | 45 |
| 26 | 4 | 2.5 | - | 6 | 100 | 100 |
| 27 | - | - | 5 | - | 35 | 25 |
| 28 | - | 1 | 4 | - | 50 | 25 |
| 29 | 6 | 1 | 4 | 6 | 100 | 100 |
| 30 | 6 | 1.25 | 3.75 | 6 | 100 | 100 |

Table 3 shows the results obtained for the ability of various formulations to inhibit the formation of calcium carbonate and calcium phosphate scales in an aqueous system having a pH of at least about 8.5 and a calcite saturation of at least 150 times the solubility limit of calcium as calcite (150X).

Examples 19 to 21 and 27, and Examples 22 to 24 and 28, of Table 3 demonstrate that when a single component (of the synergistic Composition X) is employed alone, or a combination employing any two components of Composition X respectively, are employed in the aqueous system having a calcite saturation of 150X, effective inhibition of both calcium carbonate and calcium phosphate scales is not achieved.

Examples 25 and 26, Table 3, show that a combination of a concentration of at least 4 mg/L AR540, 2.5 mg/L Belcor-575, and 6 mg/L TRC is required to inhibit 100% of both calcium carbonate and calcium phosphate scales in an aqueous system having a calcite saturation of at least 150X. However, for aqueous systems having a calcite saturation of at least 150X, the employment of Belcor-575 at concentrations above 2.0 mg/L is disadvantageous economically for similar reasons hereinbefore stated.

Examples 29 and 30 show that employing an example of the synergistic Composition X of the present invention effectively inhibits 100% of both calcium carbonate and calcium phosphate scales. Examples 29 and 30 show that use of an example of the synergistic Composition X by employing a concentration of 6 mg/L TRC, 6 mg/L AR540 and either 1 mg/L Belcor-575 and 4 mg/L Belclene 494 (Example 29), or 1.25 mg/l Belcor-575 and 3.75 mg/L Belclene 494 (Example 30), is an economically advantageous method for achieving 100% inhibition of both calcium carbonate and calcium phosphate scale formation relative to aqueous systems having a calcite saturation level of at least about 150X.

Examples 30-31

In Examples 30 and 31, formulations were tested for effectiveness in providing 100% deposit control for both calcium carbonate and calcium phosphate and for providing protection against corrosion in scaling water containing 150 mg/L of $Ca^{2+}$ and about 2 mg/L of orthophosphate at pH of about 8.8 and 60°C to achieve a calcite saturation at about 150 times the solubility limit of calcium as calcite. The analysis method set forth herein under Examples 1-18 was then followed. The makeup of the formulation for Example 30 contained about 6 mg/L TRC. The makeup of the formulation for Example 31, an example of the synergistic Composition X, contained about 6 mg/L component (A) TRC, 6 mg/L of component (B), 1 mg/L of component (C), 4 mg/L of component (D), 5 mg/L of the stabiliser monoethanolamine, and 2 mg/L of the copper corrosion inhibitor tolyltriazole.

Corrosion test procedures were carried out in an 8 L vessel fitted with a heater having a temperature controller, a pump to circulate the water in the test apparatus, a pH monitor and controller to maintain the desired pH, and an aerator to both ensure air saturation, and to introduce carbon dioxide gas as required for pH control. The steel coupon specimens for the test were composed of 1010 carbon steel (UNS designation G10100), and these were immersed in the water of the test apparatus. Corrosion penetration rates were determined gravimetrically after 7 days by the standard

ASTM-G1-88 method. The composition of the water used in the test apparatus was as follows:

| Ion | Conc. (mg/L) |
|---|---|
| Ca | 200 |
| Mg | 40 |
| Cl | 416 |
| $SO_4$ | 1025 |
| $SiO_2$ | 14 |
| Alkalinity as $CaCO_3$ | 498 |

Table 4 as follows shows the results of the scale deposit evaluation over a time period of 24 hours wherein the percent (%) inhibition of calcium carbonate and calcium phosphate was calculated at 24 hours for each example.

Table 4

| Example | Deposit Control as % Inhibition | | Corrosion Rate in metres per second (figures in brackets in mils per year) |
|---|---|---|---|
| | $CaCO_3$ | $CaPO_4$ | |
| 30 | 87 | 27 | $120 \times 10^{-12}$ (15) |
| 31 | 100 | 100 | $3.2 \times 10^{-12}$ (0.4) |

It will be appreciated by those skilled in the art that the data of Table 4 demonstrates that the aqueous system containing an example of the synergistic Composition X including corrosion inhibitor provides a dramatic improvement in corrosion rate.

From the above data, it will be appreciated by those skilled in the art that the method of the present invention comprising use of the synergistic Composition X significantly improves the inhibition of both calcium carbonate and calcium phosphate scales in an aqueous system having a calcite saturation level of at least 100 times, especially at least 150 times, the solubility limit of calcium as calcite, over conventional known compositions. Further, the present invention provides an economical resolution to the problem of inhibiting 100 percent of both calcium carbonate and calcium phosphate scale formation in an aqueous system.

## Claims

1. A method of inhibiting the formation, deposition and adherence of scale forming salts in an aqueous system having a pH of at least 8.5 and a calcite saturation level of at least 100 times the solubility limit of calcium as calcite, comprising adding to said aqueous system a composition comprising components (A) to (D) as follows: component (A): a polyether polyamino methylene phosphonate of the formula:

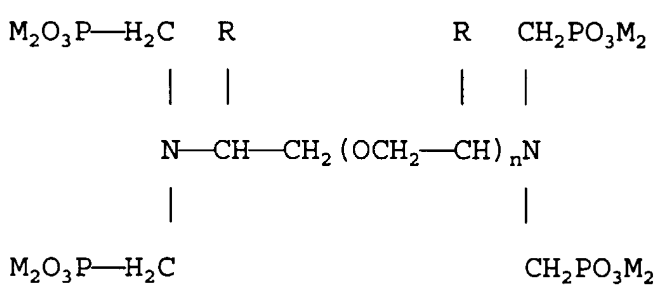

(I)

where n is an integer or fractional integer which is, or on average is, from 1 to 12, inclusive; M is hydrogen or an alkali metal; and each R may be the same or different and is independently selected from hydrogen and methyl; component (B) : a component which is either a terpolymer comprising the monomers of acrylic acid, sulfophenoxymethallyl ether and maleic acid, wherein said terpolymer has a weight average molecular weight in the range from 4,000 to 10,000 or a composition comprising a mixture of a polymaleic acid and a copolymer of acrylic acid

and sulfophenoxymethyl ether having a weight average molecular weight of from 4,000 to 10,000; component (C): a hydroxyphosphonoacetic acid; and component (D): a phosphonocarboxylic acid copolymer comprising the monomers of acrylic acid, telomer with (1-hydroxy-1-methylethyl) phosphinic acid monosodium salt and 2-acrylamido 2 methyl propane sulfonic acid.

**2.** A method as claimed in Claim 1 and wherein M is hydrogen, each R is methyl, and n is from 2 to 4.

**3.** A method as claimed in claim 1 or claim 2 and wherein the weight ratio of components (A) : (B) : (C) : (D) is in the range from 4:8:1:3 to 5:10:1:4.

**4.** A method as claimed in claim 1, claim 2 or claim 3 and wherein components (A), (B), (C) and (D) are present in the aqueous system in amounts to give concentrations in water of at least 1.0 mg/L of component (A); at least 2.0 mg/L of component (B); at least 0.20 mg/L of component (C) and at least 0.75 mg/L of component (D).

**5.** A method as claimed in claim 1 or claim 2 and which includes adding said Composition comprising components (A), (B), (C) and (D) to said aqueous system wherein component (A) is present in a concentration of at least 6.0 mg/L, component (B) is present in a concentration of at least 6.0 mg/L, component (C) is present in a concentration of at least 1.0 mg/L, and component (D) is present in a concentration of at least 3.75 mg/L and wherein the aqueous system has a calcite saturation level of at least 150 times the solubility limit of calcium as calcite.

**6.** A method as claimed in any one of the preceding claims and wherein the method includes also adding either a stabiliser or a corrosion inhibitor or both to the aqueous system.

**7.** A composition for use in the method claimed in any one of claims 1 to 6 which comprises a composition comprising components (A) to (D) as follows:

component (A): a polyether polyamino methylene phosphonate of the formula:

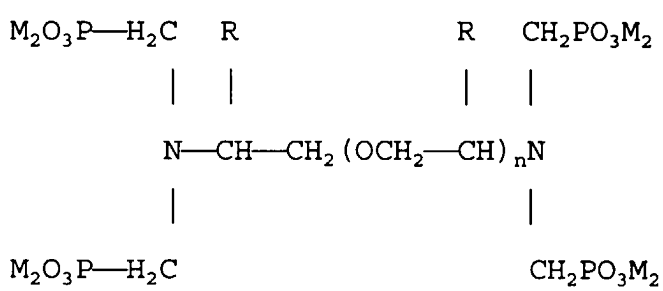

(I)

where n is an integer or fractional integer which is, or on average is, from 1 to 12, inclusive; M is hydrogen or an alkali metal; and each R may be the same or different and is independently selected from hydrogen and methyl;
component (B) : a component which is either a terpolymer comprising the monomers of acrylic acid, sulfophenoxymethallyl ether and maleic acid, wherein said terpolymer has a weight average molecular weight in the range from 4,000 to 10,000 or a composition comprising a mixture of a polymaleic acid and a copolymer of acrylic acid and sulfophenoxymethyl ether having a weight average molecular weight of from 4,000 to 10,000;
component (C): a hydroxyphosphonoacetic acid; and
component (D) : a phosphonocarboxylic acid copolymer comprising the monomers of acrylic acid, telomer with (1-hydroxy-1-methylethyl) phosphinic acid monosodium salt and 2-acrylamido 2 methyl propane sulfonic acid.

**8.** A composition as claimed in claim 8 and wherein in formula (I) M is hydrogen, each R is methyl and n is from 2 to 4 and wherein for component (B) the weight of acrylic acid units present is from 80% to 90%, the weight of sulfophenoxymethallyl ether units present is from 5% to 10% and the weight of maleic acid units present is from 5% to 10%.

**9.** A composition as claimed in claim 8 or claim 9 and wherein the weight ratio of components (A) : (B) : (C) : (D) is

in the range of from 4:8:1:3 to 5:10:1:4.

**10.** A composition as claimed in any one of claims 7 to 9 and wherein the composition also includes a stabiliser and/or a corrosion inhibitor.

**Patentansprüche**

**1.** Verfahren zur Unterdrückung der Entstehung, der Abscheidung und der Adhäsion von kesselsteinbildenden Salzen in einem wässrigen System mit einem pH-Wert von wenigstens von 8,5 und einem Calcitsättigungsgrad von wenigstens 100 mal der Löslichkeitsgrenze von Calcium als Calcit, welches die Zugabe einer Zusammensetzung, enthaltend die Komponenten A bis D zu dem wässrigen System wie folgt, umfasst:

Komponente (A): ein Polyether-polyamino-methylen-phosphonat der Formel:

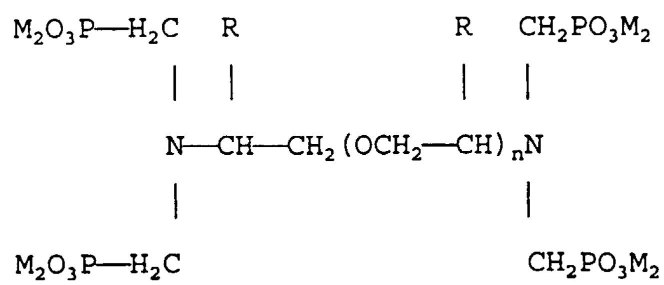

(I)

wobei n eine ganze Zahl oder eine Bruchzahl ist, welche eine Zahl von 1 bis einschließlich 12 ist oder im Durchschnitt ergibt; M Wasserstoff oder ein Alkalimetall ist; und jedes R gleich oder unterschiedlich sein kann und unabhängig voneinander ausgewählt wird aus Wasserstoff und Methyl;

Komponente (B): eine Komponente, welche entweder ein Terpolymeres, welches die Monomere Acrylsäure, Sulfophenoxymethallylether und Maleinsäure enthält, wobei das Terpolymere ein Gewichtsmittel des Molekulargewichts im Bereich von 4,000 bis 10,000 aufweist, oder eine Zusammensetzung, welche eine Mischung von einer Polymaleinsäure und einem Copolymer der Acrylsäure und Sulfophenoxymethylether mit einem Gewichtsmittel des Molekulargewichts von 4,000 bis 10,000 enthält, ist;

Komponente (C): eine Hydroxyphosphonoessigsäure; und

Komponente (D): ein Phosphonocarbonsäurecopolymer, welches die Monomere Acrylsäure, ein Telomer mit dem Mononatriumsalz der (1-Hydroxy-1-methylethyl)-phosphinsäure und 2-Acrylamido-2-methylpropansulfonsäure umfasst.

**2.** Verfahren nach Anspruch 1, in welchem M Wasserstoff ist, jedes R Methyl ist und n im Bereich von 2 bis 4 liegt.

**3.** Verfahren nach Anspruch 1 oder Anspruch 2, wobei das Gewichtsverhältnis der Komponenten (A) : (B) : (C) : (D) im Bereich von 4:8:1:3 bis 5:10:1:4 liegt.

**4.** Verfahren nach einem der Ansprüche 1 bis 3, wobei die Komponenten (A), (B), (C) und (D) in den Mengen in dem wässrigen System vorhanden sind, um eine Konzentration von wenigstens 1,0 mg/L der Komponente (A); von wenigstens 2,0 mg/L der Komponente (B); von wenigstens 0,20 mg/L der Komponente (C) und wenigstens 0,75 mg/L der Komponente (D) in Wasser zu ergeben.

**5.** Verfahren nach Anspruch 1 oder 2, umfassend die Zugabe dieser Zusammensetzung, welche die Komponenten (A), (B), (C) und (D) enthält, zu dem wässriges System, in welchem die Komponente (A) in einer Konzentration von wenigstens 6,0 mg/L, die Komponente (B) in einer Konzentration von wenigstens 6,0 mg/L, die Komponente (C) in einer Konzentration von wenigstens 1,0 mg/L und die Komponente (D) in einer Konzentration von wenigstens 3,75 mg/L vorliegen und wobei das wässrige System einen Kalzitsättigungsgrad von wenigstens 150 mal der

Löslichkeitsgrenze von Calcium als Calcit aufweist.

6. Verfahren nach einem der vorangegangenen Ansprüchen, in welchem das Verfahren ferner die Zugabe entweder eines Stabilisierungsmittel oder eines Korrosionshemmstoffs oder von beiden zu dem wässrigen System enthält.

7. Zusammensetzung zur Verwendung im Verfahren nach einem der Ansprüchen 1 bis 6, welche eine Zusammensetzung bestehend aus den Komponenten (A) bis (D) umfaßt:

Komponente (A): ein Polyether-polyamino-methylenphosphonat der Formel:

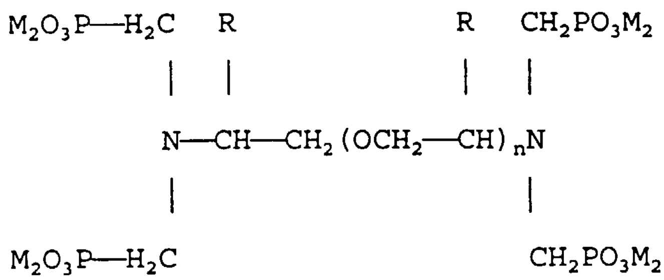

(I)

wobei n eine ganze Zahl oder eine Bruchzahl ist, welche eine Zahl von 1 bis einschließlich 12 ist oder im Durchschnitt ergibt; M Wasserstoff oder ein Alkalimetall ist; und jedes R gleich oder unterschiedlich sein kann und unabhängig voneinander ausgewählt wird aus Wasserstoff und Methyl;

Komponente (B): eine Komponente, welche entweder ein Terpolymer, welches die Monomere Acrylsäure, Sulfophenoxymethallylether und Maleinsäure enthält, wobei das Terpolymer ein Gewichtsmittel des Molekulargewichts im Bereich von 4,000 bis 10,000 aufweist, oder eine Zusammensetzung, welche eine Mischung aus einer Polymaleinsäure und einem Copolymer der Acrylsäure und Sulfophenoxymethylether mit einem Gewichtsmittel des Molekulargewichts von 4,000 bis 10,000 enthält, ist;

Komponente (C): eine Hydroxyphosphonoessigsäure; und

Komponente (D): ein Phosphonocarbonsäurecopolymer, welches die Monomere Acrylsäure, ein Telomer mit dem Mononatriumsalzes der (1-Hydroxy-1-methylethyl)-phosphinsäure und 2-Acrylamido-2-methylpropansulfonsäure umfasst.

8. Zusammensetzung nach Anspruch 8, in welcher in Formel (I) M ein Wasserstoff ist, jedes R Methyl ist und n im Bereich von 2 bis 4 liegt und in welcher für die Komponente B der Gewichtsanteil der vorhandenen Acrylsäure-Einheiten im Bereich von 80 bis 90%, der Gewichtsanteil der vorhandenen Sulfophenoxymethallylether-Einheiten im Bereich von 5 bis 10% und der Gewichtsanteil der vorhandenen Maleinsäureeinheiten im Bereich von 5 bis 10% liegt.

9. Zusammensetzung nach Anspruch 8 oder Anspruch 9, in welcher das Gewichtsverhältnis der Komponenten (A) : (B) : (C) : (D) im Bereich von 4:8:1:3 bis 5:10:1:4 liegt.

10. Zusammensetzung nach den Ansprüchen 7 bis 9, die zusätzlich ein Stabilisierungsmittel und/oder einen Korrosionshemmstoff enthält.

**Revendications**

1. Procédé pour inhiber la formation, le dépôt et l'adhérence de sels formateurs de calcaire dans un système aqueux ayant un pH d'au moins 8,5 et un niveau de saturation de la calcite d'au moins 100 fois la limite de solubilité du calcium sous forme de calcite, comprenant l'ajout audit système aqueux d'une composition comprenant les composants (A) à (D) suivants :

composant (A) : un polyéther-polyaminométhylènephosphonate de formule :

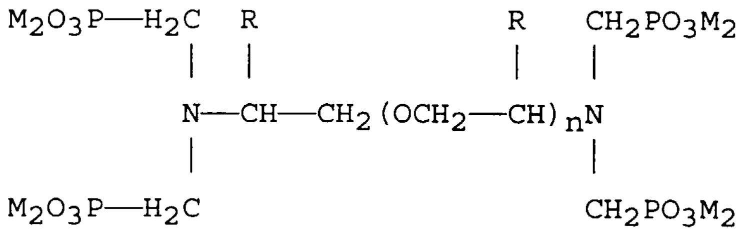

(I)

où n est un entier ou un entier fractionné qui vaut, ou vaut en moyenne, 1 à 12, bornes comprises ; M est un hydrogène ou un métal alcalin ; et chaque R peut être identique ou différent et est indépendamment choisi parmi un hydrogène et un groupe méthyle ;

composant (B) : un composant qui est soit un terpolymère comprenant les monomères acide acrylique, sulfophénoxyméthallyléther et acide maléique, ledit terpolymère ayant un poids moléculaire moyen en poids compris entre 4 000 et 10 000, soit une composition comprenant un mélange d'acide polymaléique et d'un copolymère d'acide acrylique et de sulfophénoxyméthyléther ayant un poids moléculaire moyen en poids de 4 000 à 10 000 ;

composant (C) : un acide hydroxyphosphonoacétique ; et

composant (D) : un copolymère d'acide phosphonocarboxylique comprenant les monomères acide acrylique, télomère avec le sel monosodique d'acide (1-hydroxy-1-méthyléthyl)phosphinique et acide 2-acrylamido-2-méthylpropanesulfonique.

**2.** Procédé selon la revendication 1, dans lequel M est un hydrogène, chaque R est un groupe méthyle, et n vaut 2 à 4.

**3.** Procédé selon la revendication 1 ou la revendication 2, dans lequel le rapport pondéral des composants (A) : (B) : (C) : (D) est compris entre 4 : 8 : 1 : 3 et 5 : 10 : 1 : 4.

**4.** Procédé selon la revendication 1, la revendication 2 ou la revendication 3, dans lequel les composants (A), (B), (C) et (D) sont présents dans le système aqueux en quantités permettant de donner des concentrations dans l'eau d'au moins 1,0 mg/1 de composant (A) ; d'au moins 2,0 mg/1 de composant (B) ; d'au moins 0,20 mg/l de composant (C) et d'au moins 0,75 mg/l de composant (D).

**5.** Procédé selon la revendication 1 ou la revendication 2, qui comprend l'ajout de ladite composition comprenant les composants (A), (B), (C) et (D) audit système aqueux dans lequel le composant (A) est présent à une concentration d'au moins 6,0 mg/l, le composant (B) est présent à une concentration d'au moins 6,0 mg/l, le composant (C) est présent à une concentration d'au moins 1,0 mg/l, et le composant (D) est présent à une concentration d'au moins 3,75 mg/l et où le système aqueux a un niveau de saturation de la calcite d'au moins 150 fois la limite de solubilité du calcium sous forme de calcite.

**6.** Procédé selon l'une quelconque des revendications précédentes, dans lequel le procédé comprend aussi l'ajout soit d'un stabilisant soit d'un inhibiteur de corrosion soit des deux au système aqueux.

**7.** Composition à utiliser dans le procédé selon l'une quelconque des revendications 1 à 6, qui comprend une composition comprenant les composants (A) à (D) suivants :

composant (A) : un polyéther-polyaminométhylènephosphonate de formule :

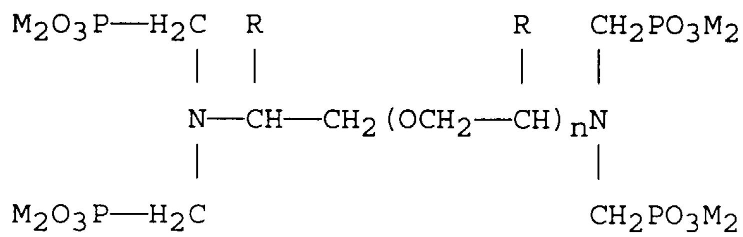 (I)

où n est un entier ou un entier fractionné qui vaut, ou vaut en moyenne, 1 à 12, bornes comprises ; M est un hydrogène ou un métal alcalin ; et chaque R peut être identique ou différent et est indépendamment choisi parmi un hydrogène et un groupe méthyle ;
composant (B) : un composant qui est soit un terpolymère comprenant les monomères acide acrylique, sulfophénoxyméthallyléther et acide maléique, ledit terpolymère ayant un poids moléculaire moyen en poids compris entre 4 000 et 10 000, soit une composition comprenant un mélange d'acide polymaléique et d'un copolymère d'acide acrylique et de sulfophénoxyméthyléther ayant un poids moléculaire moyen en poids de 4 000 à 10 000 ;
composant (C) : un acide hydroxyphosphonoacétique ; et
composant (D) : un copolymère d'acide phosphonocarboxylique comprenant les monomères acide acrylique, télomère avec le sel monosodique d'acide (1-hydroxy-1-méthyléthyl)phosphinique et acide 2-acrylamido-2-méthylpropanesulfonique.

**8.** Composition selon la revendication 8, dans laquelle dans la formule (I), M est un hydrogène, chaque R est un groupe méthyle, et n vaut 2 à 4 et dans laquelle pour le composant (B) le poids d'unités acide acrylique présentes est compris entre 80 % et 90 %, le poids d'unités sulfophénoxyméthallyléther présentes est compris entre 5 % et 10 % et le poids d'unités acide maléique présentes est compris entre 5 % et 10 %.

**9.** Composition selon la revendication 8 ou la revendication 9, dans laquelle le rapport pondéral des composants (A) : (B) : (C) : (D) est compris entre 4 : 8 : 1 : 3 et 5 : 10 : 1 : 4.

**10.** Composition selon l'une quelconque des revendications 7 à 9, dans laquelle la composition comprend aussi un stabilisant et/ou un inhibiteur de corrosion.